# EUROPEAN PATENT SPECIFICATION

(11) **EP 2 164 334 B1**
(45) Date of publication and mention of the grant of the patent: **01.02.2012**
(21) Application number: 08751305.7
(22) Date of filing: 22.05.2008
(51) Int. Cl.: A21C 11/00

(54) **LINE, METHOD AND PROCESSING STATION FOR FORMING DOUGH DISKS SUCH AS PIZZA BASES OR THE LIKE**
LINIE, VERFAHREN UND VERARBEITUNGSSTATION ZUM FORMEN VON TEIGSCHEIBEN, WIE ZUM BEISPIEL PIZZABÖDEN ODER DERGLEICHEN
CHAÎNE, PROCÉDÉ ET POSTE DE TRAITEMENT POUR FORMER DES DISQUES DE PÂTE TELS QUE DES BASES DE PIZZA OU ANALOGUES

(30) Priority: 23.05.2007 IT VI20070148
(43) Date of publication of application: 24.03.2010
(73) Proprietor: Iteca S.p.A., 37050 Palù (VR) (IT)
(72) Inventor: BENETTI, Luigi, I-37100 Verona (IT)
(74) Representative: Autuori, Angelo
(86) International application number: PCT/IB2008/052027
(87) International publication number: WO 2008/142660

(56) References cited:
- EP-A- 0 463 221
- EP-A- 1 060 670
- EP-A- 1 129 621
- WO-A-2006/129759
- FR-A- 2 492 225
- US-A- 5 006 358
- US-A- 5 388 503
- US-A1- 2005 287 240

## Description

### Field of invention

The present invention finds application in food processing industry, and particularly relates to a line for forming dough disks, such as pizza bases or the like.

In another aspect, the invention relates to a dough forming method and a processing station therefor.

### Background Art

The process of forming dough disks, such as pizza bases or the like includes two sequential basic steps: pressing and sheeting.

Pressing is aimed at imparting a substantially disk-like shape to the starting dough portion, which is usually of substantially spheroidal shape. On the other hand, sheeting is designed to impart the desired height and diameter, possibly differing as needed, to the pressed dough.

Nowadays, due to technological reasons, forming is carried out using several different machines operating on various belt conveyors, possibly arranged orthogonal to each other. Particularly, dough forming is generally carried out while the dough is still at the relevant machines.

One drawback of the prior art forming lines is that they have a relatively low production rate. By contrast, their size and costs are unacceptably high.

Another drawback is associated with the multiple conveyors that are used particularly for feeding the product through the various stations of the line. As the product passes from one belt to the other it inevitably loses its right working position and requires realignment to be properly presented to the various processing stations.

Furthermore, the multitude of belts that are provided creates a number of mechanical complications.

The European patent application EP-A1-0463221 discloses a calibration device including a circular cutter cooperating with a rotating working plane to impart a predetermined standard diameter and a rim to the product.

From the US patent application US2005/0287240 a pressing apparatus is known for processing the dough as it moves. The press is moved along the same axis and direction as the dough.

### Summary of the invention

The object of this invention is to overcome the above drawbacks, by providing a line for forming dough disks that is highly efficient and relatively cost-effective.

A particular object is to provide a line that affords minimized space requirements and maximized throughput.

Another object is to provide a line that involves minimized stresses on the dough, and hence maintains its organoleptic characteristics almost unchanged.

A further object of the invention is to provide a method that ensures repeatability during production.

Yet another object of the invention is to provide a processing station that affords maximized production rate.

These and other objects as more clearly shown hereafter, are fulfilled by a forming line as defined in claim 1.

Thanks to this particular configuration, the forming line of the invention has minimized space requirements and ensures maximized throughput. Since the dough is processed as it moves, production occurs continuously and is thus maximized, and especially the use of storage tanks, rephasers and the like can be avoided, wherefore space requirements can be minimized.

Advantageously, the press and/or the sheeting device may be also designed to be fed at substantially the same speed as the dough portion as it interacts therewith, so that no motion occurs between the dough and the press and/or the sheeting device. This will prevent stresses from being exerted on the dough, and preserve its organoleptic properties.

Suitably, the forwarding means may include a single belt conveyor extending from the input to the output of the line. This will prevent stresses from being exerted on the dough, and maintain its organoleptic properties substantially unchanged. Thanks to the provision of a single belt conveyor, the line control and drive section will be greatly simplified, thereby reducing costs and sizes. This also avoids the need for speed adjustments, as well as the use of any connecting conveyors and equipment.

In another aspect, the invention relates to a methods for forming dough disks as defined in claim 15.

Advantageous embodiments of the invention will be defined in accordance with the dependent claims.

### Brief description of the drawings

Further features and advantages of the invention will be more apparent upon reading of the detailed description of a preferred, non-exclusive embodiment of a line according to the invention, which is described as a non-limiting example with the help of the annexed drawings, in which:
FIG. 1 is a side view of a line of the invention;
FIG. 2 is a top view of a line of the invention;
FIG. 3 is a side view of a processing station that is part of the line of the invention, which shows the start and end positions (the latter one in broken lines) of the processing heads;
FIGS. 4 and 7 are side views of the processing station of FIG. 3, in which the processing heads are in the rest position;
FIGS. 5 and 6 are side views of the processing station of FIG. 3, in which the processing heads are in the work position;
FIG. 8 is an axonometric view of certain details of a processing device 6, in which the protective shield 40 has been shown in broken lines.

### Detailed description of a preferred embodiment

Referring to the above figures, the line of the invention, generally designated by numeral 1, may be advantageously used for forming dough disks, such as for pizza or the like.

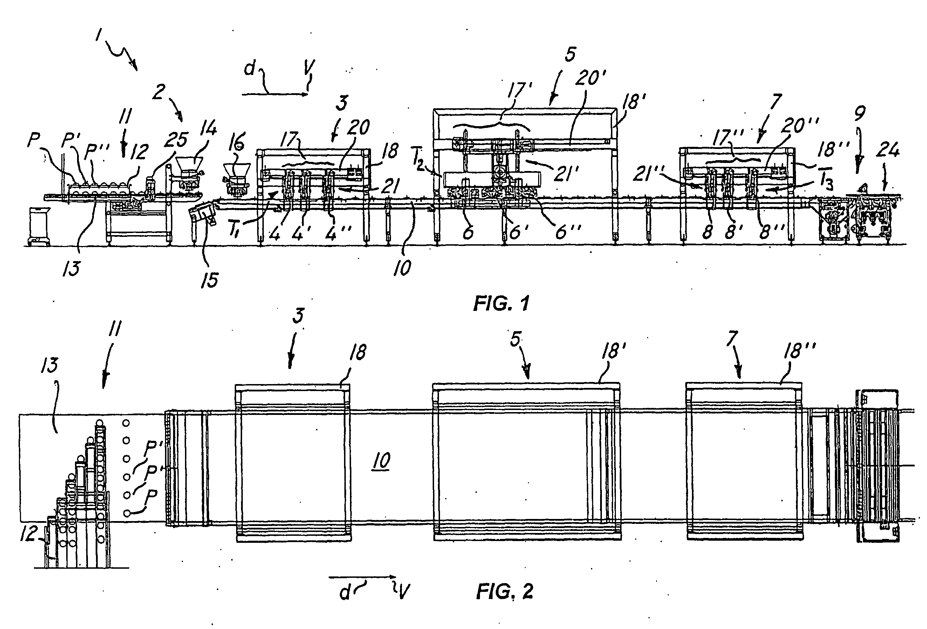

As shown in Figures 1 and 2, the line of the invention essentially has an input 2 for the portions of yeast dough P, P', P", ..., a first processing station 3 with a plurality of presses 4, 4', 4" susceptible of interacting with the dough P, P', P", a second processing station 5, having a plurality of sheeting devices 6, 6', 6" adapted to interact with the dough that comes out of the first processing station, the third processing station 7 with a plurality of calibrating devices 8, 8', 8" adapted to calibrate the dough that comes from the second station and an output 9 for the dough so processed.

The line 1 may either or not comprise the third calibrating station 7. While reference will be made hereinafter to a line 1 that also comprises the third station 7, it shall be understood that the line 1 may also include the first and the second stations 3 and 5 only, without departure from the scope as defined in the annexed claims. If the line 1 does not comprise the third station 7, the output for the dough portion P, P', P" is located directly downstream of the second sheeting station 5.

In a preferred, non exclusive arrangement of the invention, the sheeting devices 6, 6', 6" may comprise a plurality of cones 30, 30', 30" rotating about respective axes Y, Y', Y" to interact with the previously pressed dough disks P, P', P".... Preferably, each device 6, 6', 6" may have three cones disposed at 120° from each other.

The line 1 further comprises forwarding means for advancing the dough portion P, P', P", ... from the input 2 to the output 9, which may be defined by a single main belt conveyor 10 extending along a substantially horizontal straight axis d. Nevertheless, any other forwarding means may be used, such as a plurality of belt conveyors, without departure from the inventive scope as defined in the annexed claims.

A dough leavening chamber, not shown but well known per se, and a loading station 11 for loading the dough P, P', P", ... may be located upstream of the input 2 of the line 1.

The loading station 11 may include a first belt conveyor 12 for receiving the dough portions P, P', P", ... from the loading chamber and a second belt conveyor 13, located perpendicular to and below the former and substantially aligned with the belt 10. The first belt conveyor 12 is composed of a plurality of conveyor elements of different lengths, for alignment of the portions P, P', P" ... on the second belt 13. The latter may in turn have a connecting cup device, not shown but known per se, for compensating for any misalignment caused by inappropriate loading on the first belt 12.

The load station 11 may also comprise a flour duster 14 downstream from the second belt 13 for sprinkling flour on the portion P, P', P", ... thereby preventing it from sticking with the subsequent belts. A small belt 15 may be further provided downstream from the flour duster 14, to define the input 2 of the line proper. This belt 15, inclined to the main extension plane of the belts 13 and 10, may cooperate therewith to upturn the portion P, P', P"... and lay the previously dusted face thereof on the next belt.

Another flour duster 16 may be further provided for sprinkling flour on the free surface of the dough P, P', P"... to prevent it from sticking with the subsequent processing heads.

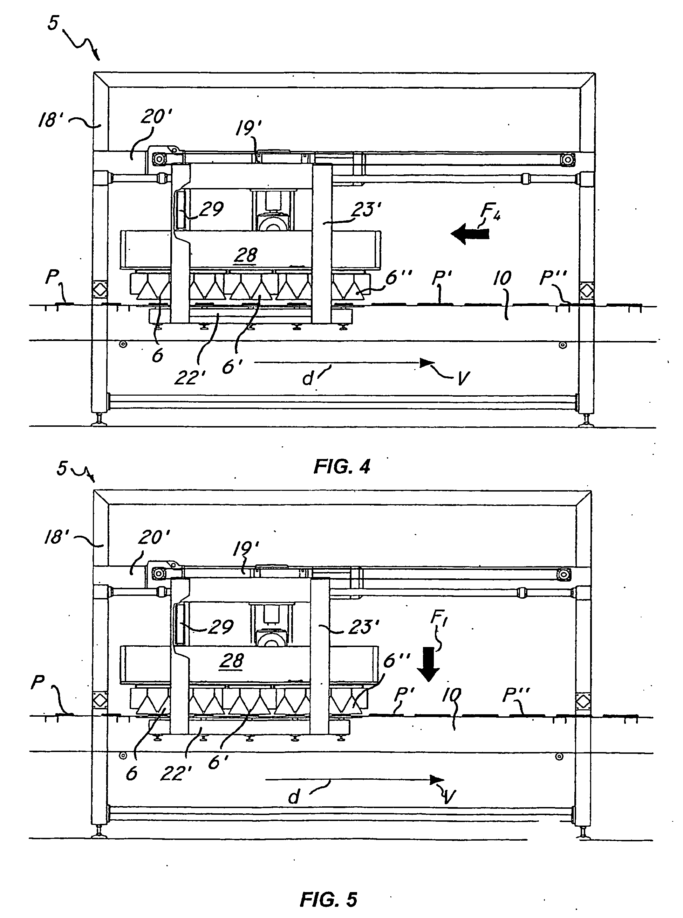

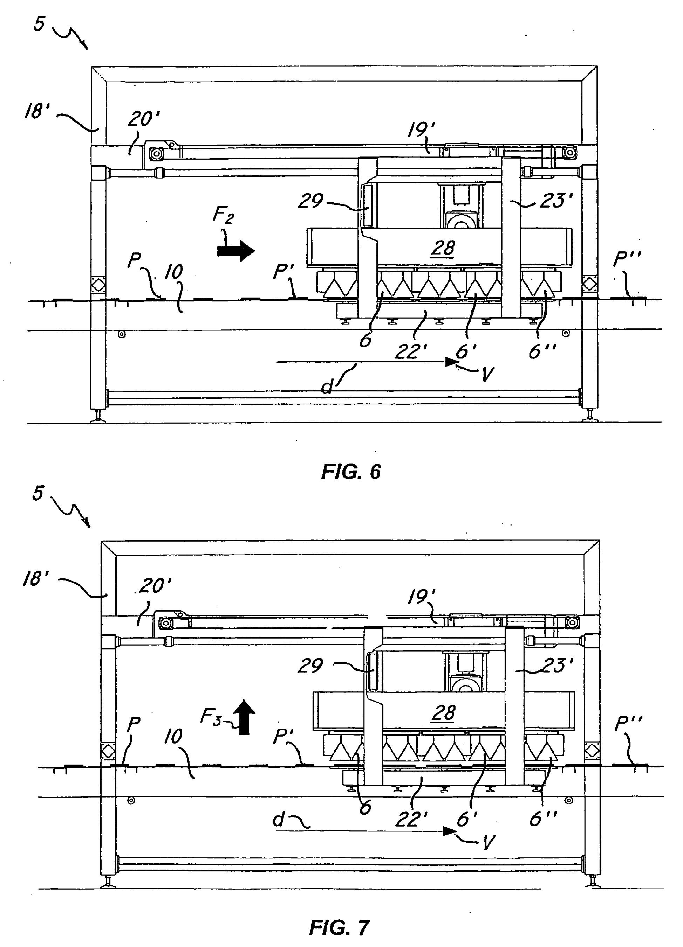

Each processing station 3, 5 and 7 comprises means 17, 17', 17" for driving its processing heads, particularly the presses 4, 4', 4", the sheeting devices 6, 6', 6" and the calibrating devices 8, 8', 8" respectively from a first rest position away from the portions P, P', P", as shown in Figures 4 and 7, to a second work position, as shown in Figures 5 and 6, in which they interact with the dough portion P, P', P"....

According to the invention, the single belt 10 is designed to forward the dough portion P, P', P" from the input 2 to the output 9 along the axis d in a continuous manner, i.e. with no stops. Preferably, the belt 10 is designed to feed the dough P, P', P"... at substantially uniform and constant speed.

Furthermore, the processing heads of the stations 3, 5 and 7 will be designed to be advance along the same axis d and preferably substantially at the same speed as the dough portion P, P', P"... (and hence as the single belt 10) as they interact therewith, to allow processing of the dough as it moves.

For this purpose, the drive means 17, 17', 17" have respective frames 18, 18', 18" above the single belt 10, adapted to support the processing heads 4, 4', 4", 6, 6', 6" and 8, 8', 8" of the processing stations 3, 5 and 7 and ensuring motion thereof.

Each frame 18, 18', 18" has a carriage 19, 19', 19" that slides along a guide crossbar 20, 20', 20" substantially parallel to the axis of advancement of the dough P, P', P"... which is horizontal in the illustrated example. The processing heads 4, 4', 4", 6, 6', 6" e 8, 8', 8" of the processing stations 3, 5 and 7 will be mounted to the carriage, which will ensure horizontal displacement thereof.

Each carriage 19, 19', 19" in turn includes means 21, 21', 21" for vertically driving the processing heads 4, 4', 4", 6, 6', 6" and 8, 8', 8" of the processing stations 3, 5 and 7.

The combination of the horizontal motion of the carriages 19, 19', 19" and the vertical motion of the means 21, 21', 21" allows the processing heads 4, 4', 4", 6, 6', 6" and 8, 8', 8" of the processing stations 3, 5 and 7 to move from the rest position to the work position and vice versa.

Each processing station 3, 5 and 7 may have a respective set of plates 22, 22', 22" below the single belt 10 and facing towards the processing heads 4, 4', 4", 6, 6', 6" and 8, 8', 8" to act as an abutment therefor.

The plates of the set 22, 22', 22" are integral with the carriages 19, 19', 19" via connecting crossbars 23, 23', 23", so that the carriages 19, 19', 19" can drive the plates 22, 22' and 22" in their horizontal motion. Thus, the plates will always and constantly face towards the processing heads 4, 4', 4", 6, 6', 6" and 8, 8', 8" as they interact with the dough portion P, P', P"... for proper processing thereof.

An unloading station, possibly similar to the loading station 11, may be located downstream of the output 9, to lead to the next processing stations, such as for filling and baking the dough P, P', P"....

In a preferred, non exclusive embodiment of the invention, the line 1 may include a microprocessor unit, not shown but known per se, for synchronizing the motion of the conveyor 10 with the motion of the carriages 19, 19', 19" and vertical drive means 21, 21', 21" to make the two motions independent from each other. Such synchronization will avoid the use of means for detecting the moving dough on the main belt 10.

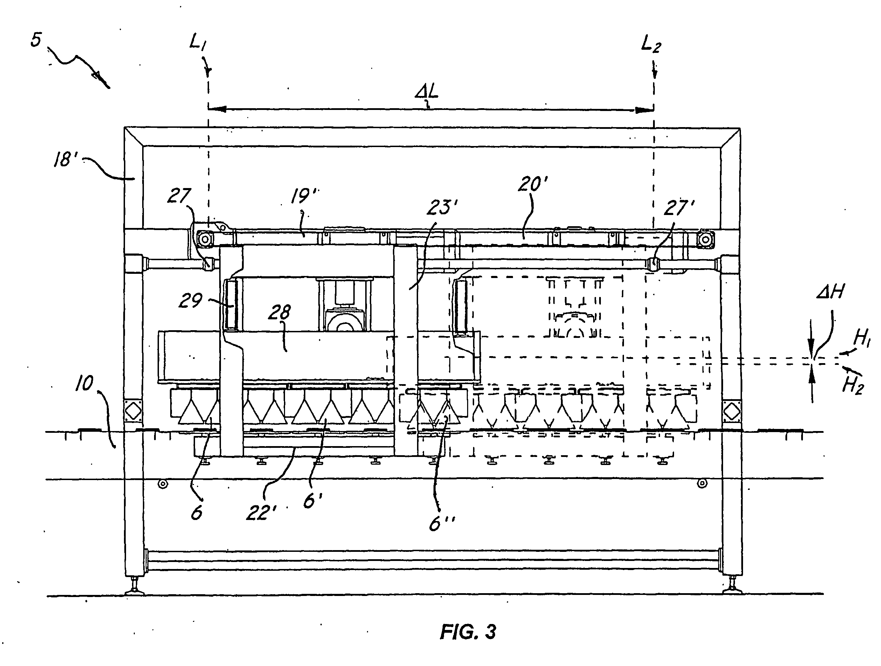

Figures 3 to 7 show a processing cycle of a processing station. As mentioned above, each processing station 3, 5 and 7 has respective processing heads, particularly the presses 4, 4', 4", the sheeting devices 6, 6', 6" and the calibrating devices 8, 8', 8".

While the processing cycle as shown in Figures 3 to 7 is related to the sheeting station 5, having respective sheeting devices 6, 6', 6", it shall be understood that both the pressing station 3 and the calibrating station 7 and hence the presses 4, 4', 4" and the calibrating devices 8, 8', 8" operate substantially in the same manner. It shall be further understood that, while Figures 3 to 7 show a processing station 5 with five sheeting devices, the latter may be provided in any number without departure from the scope of the invention, as defined by the annexed claims.

As shown in the figures, the sheeting devices 6, 6', 6" are mounted to a crossbar 28 vertically movable along threaded columns 29, 29' that define the vertical drive means 21'. Clockwise and counterclockwise motion of the threaded columns 29, 29' (in turn controlled by special motor means connected to a PLC unit, not shown but known per se) allows height adjustment of the crossbar 28 and hence of the sheeting devices 6, 6', 6".

The carriage 19' and the crossbar 28 (with the sheeting devices 6, 6', 6" integral therewith) cover respective strokes ΔL and ΔH, as shown in Figure 7, respectively along an axis substantially parallel to the axis of feed d of the dough P, P', P"... and along an axis substantially perpendicular thereto, to carry the sheeting devices 6, 6', 6" from the rest position to the work position and vice versa. Particularly, the carriage 19' will move from a start position L₁ to an end position L₂ and vice versa, whereas the crossbar 28 will move from a start height H₁ to an end height H₂ and vice versa, as particularly shown in Figure 3.

From the rest position as shown in Figure 4, the sheeting devices 6, 6', 6" will cover the stroke ΔH, which is defined as the difference between the heights H₁ and H₂, to move from the rest position to the work position, and thence will interact with the dough along the section ΔL, which is defined as the difference between the positions L₂ and L₁, and finally raise again by ΔH to the start position.

Both strokes ΔH and ΔL can be adjusted as desired, e.g. by microprocessor programming, using a microprocessor-based unit of the PLC type. Abutment means may be further provided along both ΔH and ΔL. In the example of the figures, the two stop elements 27 and 27' are shown, which actually define the stroke ΔL.

The speeds of motion along both ΔH and ΔL may be also changed as desired (such as by the same PLC as mentioned above) as long as the speed of the carriage 19' will be substantially the same as the single conveyor 10 as the sheeting devices 6, 6', 6" interact with the dough P, P', P".... The PLC may be also used to set the time intervals from one displacement to the others as desired.

In this respect, the speed of the single conveyor 10 may be synchronized with the speed of the horizontal and vertical drive means 19', 21' of the sheeting devices 6, 6', 6", for the two motions to be substantially independent of each other. In this case, the driving cycle of the sheeting devices 6, 6', 6" along both ΔH and ΔL may be also continuous and independent of the continuous motion of the dough P, P', P"... along the axis d.

Otherwise, for instance for particular production requirements, the two motions can be caused to be dependent on each other using sensor means, such as an array of proximity sensors, so that the sheeting devices 6, 6', 6" will be only driven if the sensors detect the dough P, P', P"....

The various positions as mentioned above will be now described in detail.

Figure 4 shows a start rest position of the sheeting devices 6, 6', 6". In this position, the sheeting devices 6, 6', 6" are at their maximum height H₁ and the carriage 19' abuts against the stop element 27 in the position L₁. The height H₁ is defined such that the cones 6, 6', 6" are at such a height that they do not interact with the dough P, P', P".... The latter comes from the previous station 3 and enters the workstation 5 on the belt 10, along the axis d and in the direction V, preferably at a substantially constant speed. The surface plates 22' face towards the cones 6, 6', 6" which are also in the position L₁.

After a first predetermined time, that can be set by the above mentioned PLC, the threaded columns 29, 29' will vertically drive (along the arrow F₁) the crossbar 28, and the sheeting devices 6, 6', 6" therewith, from the rest position at the height H₁ to the work position, at the height H₂, in which the sheeters 6, 6', 6" are in contact with the dough P, P', P".... This situation is shown in Figure 5. The surface plates 22' are always in the position L₁. In this position, the sheeters 6, 6', 6" will start processing of the dough P, P', P"..., to reduce its thickness and increase its width.

Interaction between the sheeters 6, 6', 6" and the dough P, P', P" ... will occur continuously along the axis d and in the direction V. For this purpose, after a second predetermined time (that may be very short), with the dough still seamlessly moving on the single belt 10, the carriage 19' will move from the start position L₁ to the end position L₂ as shown in Figure 6, following the arrow F₂, along the axis d and in the direction V. The plates 22', integral with the carriage 19' will move in the same direction as the crossbeam 28 and the sheeters 6, 6', 6" to act as abutments therefor. During this step, the carriage 19' (and hence ther crossbeam 28, the sheeters 6, 6', 6" and the plates 22') and the single belt 10 will have substantially the same speed, to prevent exertion of stresses on the dough P, P', P"....

Now, after a third predetermined time, that will be long enough for the carriage 19' to reach the position L₂, the threaded columns 29, 29' will vertically drive (along the arrow F₃) the crossbar 28, and the sheeting devices 6, 6', 6" therewith, from the work position at the height H₂ to the rest position, at the height H₁, in which the sheeters 6, 6', 6" are away from the dough P, P', P"... and not in contact therewith. This situation is shown in Figure 7. The surface plates 22' are always in the position L₂. The dough P, P', P", ... will still move on the single belt 10 along the axis d and in the direction V to the next calibration station 7, whereas more dough from the previous pressing station 3 will enter the sheeting station 5 for processing.

For this purpose, after an additional predetermined time, the carriage 19' will move along the arrow F₄ to carry the crossbeam 28 and the sheeters 6, 6', 6" and the surface plates 22', from the position L₂ to the start position L₁, still along the axis d, but in a direction V' opposite to V. Advantageously, this motion may be very fast, in view of minimizing dead times and maximizing throughput.

Once the carriage 19' has reached the position L₁, the cycle will restart anew.

The line 1 process the dough P, P', P"... using a method that includes the following steps.

First the portions P, P', P'... are manually or automatically fed to the loading station 11 from the leavening chamber. Then, the portions P, P', P"... are laid on the belt 12 and move therefrom along an axis substantially perpendicular to d, to the underlying belt 13. Here, they may be stopped and realigned to be next fed on the same belt 13 along the axis of feed d in the direction V.

The portions P, P', P"... will be first submitted to a first leveling step by the leveler 25, whose function is to minimize the stresses that will be exerted on the dough by the subsequent pressing step, and to a first flour dusting step by the flour duster 14.

Then the portions P, P', P"... will reach the edge of the belt 13 and fall by gravity onto the small underlying belt 15 face down, so that the previously flour-dusted face defines the contact surface of the dough P, P', P"... with the belt.

The belt 14 will move along the axis d and in the direction V to carry the dough portions P, P', P"... to the input of the single main belt 10 that moves along the same axis and in the same direction as the belt 15. In a preferred, non exclusive configuration of the invention, the single belt 10 will move continuously at a substantially constant speed, preferably from 100 to 200 mm/sec.

Thus, as the dough portions P, P', P" are fed along the axis d in the direction V, they will be first submitted to a second flour dusting step by the flour duster 16 and will then enter the first work station 3.

All the above steps upstream of the latter will aimed at preparing the dough portions P, P', P"... for further processing.

As used herein, the term "preparing" and derivatives thereof, designates the preparation of a relevant element for a relevant process step, including any preventive treatment designed for optimal performance of such relevant step, from simple collection and possible storage to thermal and/or chemical and/or physical and the like pre-treatments.

At the first work station 3, the presses 4, 4', 4" will move from the rest position to the operating position to process the dough P, P', P"... from a substantially ball or egg shape into a substantially disk-shaped element, as they move along the axis d and in the direction V.

For this purpose, each press 4, 4', 4" may have an end hammer for pressing the dough P, P', P"... with predetermined force.

Then, the disk-shaped dough P, P', P"... moves on the single belt 10, along the axis d and in the direction V from the output of first processing station 3 to the input of the second processing station 5.

Now, the sheeting devices 6, 6', 6" will move from the rest position to the operating position to impart predetermined height and diameter to the previously pressed dough disks P, P', P".... This step is carried out as they move along the axis d and in the direction V.

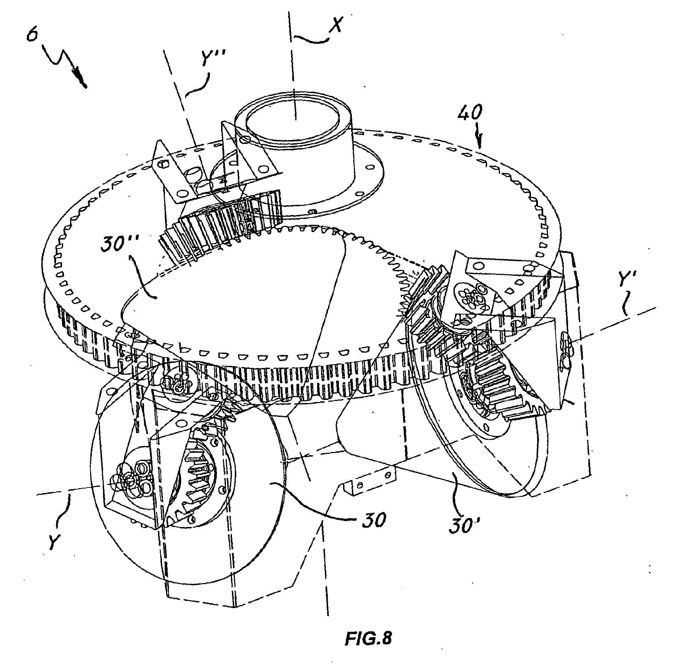

For this purpose, in a preferred, non exclusive arrangement of the invention, the sheeting devices 6, 6', 6" may comprise a plurality of cones 30, 30', 30" rotating about a substantially vertical axis X, as shown in Figure 8. Each cone 30, 30', 30" also rotates about an inclined axis Y, Y', Y" to interact with the previously pressed dough disks P, P', P"... Preferably, each device 6, 6', 6" may include three cones arranged at 120° from each other. The cones of each device 6, 6', 6" may be further protected by a case 40.

Then, the dough P, P', P".., still moving on the single belt 10, leaves the second processing station 5 to reach the input of the third processing station 7.

Now, the calibrating devices 8, 8', 8" will move from the rest position to the operating position to calibrate the outer peripheral edge of the dough portions P, P', P"... as the latter still move along the axis d in the direction V.

For this purpose, the calibrating devices 8, 8', 8" may be of traditional type, i.e. composed of a plurality of adjacent elements that define a circumference, and are mutually movable to process the dough P, P', P"... at its peripheral edge for calibration.

The above disclosure clearly shows that the line and method for forming dough disks according to the invention fulfils the intended objects and particularly the object of minimizing space requirements and maximizing throughput.

The line and method of the invention afford more than 50% reduced space requirements with the same throughput or above 50% higher throughput with the same space requirements.

Another apparent advantage of the line and method of the invention is that the various processing stations may be arranged along a substantially horizontal direction, thereby reducing space requirements and minimizing the space volumes occupied thereby.

The line and method of the invention are susceptible to a number of changes and variants. All the details thereof may be replaced by other technically equivalent parts, and the materials may vary depending on different needs.

While the line and method have been described with particular reference to the accompanying figures, the numerals referred to in the disclosure and claims are only used for the sake of a better intelligibility of the invention and shall not be intended to limit the claimed scope in any manner.

## Claims

1. A line for forming dough disks, such as for pizza bases or the like, comprising:
- an input (2) for at least one portion of dough (P, P', P"...) to be processed;
- a first processing station (3) with at least one press (4, 4', 4") susceptible of interacting with said dough portion (P, P', P"...) to obtain a substantially disk- shaped element;
- a second processing station (5) downstream from said first station (3) having at least one sheeting device (6, 6', 6") susceptible of interacting with said pressed disk to impart predetermined height and diameter thereto;
- an output (9) for the sheeted disk;
- forwarding means (10) for advancing said dough portion (P, P', P"...) from said input (2) to said output (9);
wherein said forwarding means (10) are designed to continuously forward said dough portion (P, P', P"...) from said input (2) to said output (9), and wherein said at least one press (4, 4', 4") and/or said at least one sheeting device (6, 6', 6") are designed to advance along the same axis (d) and in the same direction (V) as said dough portion (P, P', P"...) as they interact therewith, for processing the dough (P, P', P"...) as it moves,
and wherein said at least one press (4, 4', 4") includes an end hammer for pressing the dough (P, P', P"...) with predetermined force.

2. Line as claimed in claim 1 , wherein said at least one press (4, 4', 4") and/or said at least one sheeting device (6, 6', 6") are further designed to advance substantially at the same speed as said dough portion (P, P', P"...) as they interact therewith.

3. Line as claimed in claim 1 or 2, wherein said forwarding means (10) include a single belt conveyor extending from said input (2) to said output (9).

4. Line as claimed in claim 1, 2 or 3, wherein said forwarding means (10) move said dough portion (P, P', P"...) at substantially constant speed.

5. Line as claimed in any one of claims 1 to 4, comprising means (17, 17', 17") for driving said at least one press (4, 4', 4") and/or said at least one sheeting device (6, 6', 6") from a first rest position away from said dough portion (P, P', P"...) to a second work position in which they interact with said dough portion (P, P', P"...).

6. Line as claimed in claim 5, wherein said drive means (17, 17', 17") have a frame (18, 18', 18") with guide crossbars (20, 20', 20") substantially parallel to the axis of feed (d) of the dough (P, P'x, P"...).

7. Line as claimed in claim 6, wherein said drive means (17, 17', 17") further have a carriage (19, 19', 19") that slides along said guide crossbars (20, 20', 20"), said at least one press (4, 4', 4") and/or said at least one sheeting device (6, 6', 6") being mounted to said carriage (19, 19', 19").

8. Line as claimed in claim 7, wherein said carriage (19, 19', 19") comprises vertical drive means (21 , 21', 21 ") for vertically driving said at least one press (4, 4', 4") and/or said at least one sheeting device (6, 6', 6") from said rest position to said work position and vice versa.

9. Line as claimed in one or more of claims 1 to 8, wherein said first (3) and/or said second processing stations (5) include at least one plate (22, 22', 22") located below said forwarding means (10) and facing towards said at least one press (4, 4', 4") and/or said at least one sheeting device (6, 6', 6") to act as an abutment therefor during interaction with the dough (P, P', P"...).

10. Line as claimed in claim 9, wherein said at least one plate (22, 22', 22") is designed to advance substantially at the same speed as said at least one press (4, 4', 4") and/or said at least one sheeting device (6, 6', 6") during interaction with said dough portion (P, P', P"...).

11. Line as claimed in one or more of claims 1 to 10, comprising a microprocessor-based unit for synchronizing the motion of said feed means (10) with the motion of said carriage (19, 19', 19") and said vertical drive means (21 , 21', 21 ").

12. Line as claimed in one or more of claims 1 to 11 , wherein said sheeting device (6, 6', 6") comprises a plurality of cones (30, 30', 30") rotating about a substantially vertical axis (X), each of said cones (30, 30', 30") also rotating about respective inclined axes (Y, Y', Y") to interact with the pressed disk.

13. Line as claimed in one or more of claims 1 to 12, wherein said input (2), said first (3) and second processing stations (5) and said output (9) are arranged along a substantially horizontal and straight axis (d).

14. Line as claimed in one or more of claims 1 to 13, comprising a third processing station (7) located downstream from said second station (5) and upstream from said output (9), said third station (7) comprising at least one calibrating device (8, 8', 8") susceptible of interacting with said sheeted disk to calibrate its outer peripheral edge, said at least one calibrating device (8, 8', 8") being mounted to respective drive means (17") to be movable from a respective rest position to a respective work position and vice versa.

15. A method for forming dough disks using the line as claimed in one or more of the preceding claims, comprising the steps of:
a) providing a portion of dough (P, P', P"...) to be processed;
b) first processing of said dough portion (P, P', P"...) by means of at least one press (4, 4', 4") to obtain a substantially disk-shaped element;
c) second processing of the disk so obtained by means of a sheeting device (6, 6', 6") to impart predetermined height and diameter thereto;
wherein, during said first and/or said second processing steps, said dough portion (P, P', P"...) is continuously advanced, and wherein said at least one press (4, 4', 4") and/or said at least one sheeting device (6, 6', 6") are designed to advance substantially along the same axis (d) and in the same direction (V) as said dough portion (P, P', P"...) as they interact therewith,
and wherein said at least one press (4, 4', 4") includes an end hammer for pressing the dough (P, P', P"...) with predetermined force.

## Patentansprüche

1. Linie zum Formen von Teigscheiben, wie zum Beispiel Pizzaböden oder dergleichen, umfassend:
- einen Eingang (2) für zumindest einen Teigabschnitt (P, P', P"...), der verarbeitet werden soll;
- eine erste Verarbeitungsstation (3) mit zumindest einer Presse (4, 4', 4"), die zum Wechselwirken mit dem Teigabschnitt (P, P', P"...) zum Erhalten eines im Wesentlichen scheibenförmigen Elements geeignet ist;
- eine zweite Verarbeitungsstation (5), die der ersten Verarbeitungsstation (3) nachgeschaltet ist, mit zumindest einer Auswalzvorrichtung (6, 6', 6"), die zum Wechselwirken mit der gepressten Scheibe geeignet ist, um ihr eine vorgegebene Höhe und ein vorgegebenes Durchmesser zu erteilen
- einen Ausgang (9) für die ausgewalzte Scheibe;
- Weiterleitungsmittel (10) zum Vorschieben des Teigabschnitts (P, P', P"...) vom Eingang (2) zum Ausgang (9);
wobei die Weiterleitungsmittel (10) zum fortlaufenden Zuführen des Teigabschnitts (P, P', P"...) vom Eingang (2) zum Ausgang (9) gestaltet sind, und wobei die zumindest eine Presse (4, 4', 4") und/oder die zumindest eine Auswalzvorrichtung (6, 6', 6") zum Weiterleiten entlang derselben Achse (d) und in derselben Richtung (V) wie der Teigabschnitt (P, P', P"...), wenn sie damit in Wechselwirkung stehen, zum Verarbeiten des Teigs (P, P', P"...), während er in Bewegung ist, gestaltet sind,
und wobei die zumindest eine Presse (4, 4', 4") einen Endhammer zum Pressen des Teigs (P, P', P"...) mit vorgegebener Kraft enthält.

2. Linie nach Anspruch 1, wobei die zumindest eine Presse (4, 4', 4") und/oder die zumindest eine Auswalzvorrichtung (6, 6', 6") ferner gestaltet sind, mit im Wesentlichen derselben Geschwindigkeit wie der Teigabschnitt (P, P', P"...) vorwärts zu gehen, wenn sie damit in Wechselwirkung stehen.

3. Linie nach einem der Ansprüche 1 oder 2, wobei die Weiterleitungsmittel (10) ein einzelnes Förderband enthalten, der vom Eingang (2) zum Ausgang (9) verläuft.

4. Linie nach einem der Ansprüche 1, 2 oder 3, wobei die Weiterleitungsmittel (10) den Teigabschnitt (P, P', P"...) mit im Wesentlichen konstanter Geschwindigkeit bewegen.

5. Linie nach einem der Ansprüche 1 bis 4, umfassend Mittel (17, 17', 17") zum Antreiben der zumindest einen Presse (4, 4', 4") und/oder der zumindest einen Auswalzvorrichtung (6, 6', 6") aus einer ersten Ruheposition weg von dem Teigabschnitt (P, P', P"...) zu einer zweiten Arbeitsposition, in der sie mit dem Teigabschnitt (P, P', P"...) in Wechselwirkung stehen.

6. Linie nach Anspruch 5, wobei die Antriebsmittel (17, 17', 17") einen Rahmen (18, 18', 18") mit Führungsquerschienen (20, 20', 20") im Wesentlichen parallel zur Zufuhrachse (d) des Teigs (P, P', P"...) aufweisen.

7. Linie nach Anspruch 6, wobei die Antriebsmittel (17, 17', 17") ferner einen Schlitten (19, 19', 19") aufweisen, der entlang der Führungsquerschienen (20, 20', 20") gleitet, wobei die zumindest eine Presse 4, 4', 4") und/oder die zumindest eine Auswalzvorrichtung (6, 6', 6") an dem Schlitten (19, 19', 19") angebracht sind.

8. Linie nach Anspruch 7, wobei der Schlitten (19, 19', 19") vertikale Antriebsmittel (21, 21', 21") zum vertikalen Antrieben der zumindest einen Presse (4, 4', 4") und/oder der zumindest einen Auswalzvorrichtung (6, 6', 6") aus der Ruheposition in die Arbeitsposition und umgekehrt umfasst.

9. Linie nach einem der Ansprüche 1 bis 8, wobei die erste (3) und/oder die zweite Verarbeitungsstation (5) zumindest eine Platte (22, 22', 22"), die sich unter den Weiterleitungsmittel (10) befindet und der zumindest einen Presse (4, 4', 4") und/oder der zumindest einen Auswalzvorrichtung (6, 6', 6") zugekehrt ist, zum Wirken als Angrenzung dafür während der Wechselwirkung mit dem Teig (P, P', P"...) enthalten.

10. Linie nach Anspruch 9, wobei die zumindest eine Platte (22, 22', 22")gestaltet ist, um während der Wechselwirkung mit dem Teigabschnitt (P, P', P"...) mit im Wesentlichen derselben Geschwindigkeit wie die zumindest eine Presse (4, 4', 4") und/oder die zumindest eine Auswalzvorrichtung (6, 6', 6") vorwärts zu gehen.

11. Linie nach einem oder mehreren der Ansprüche 1 bis 10, umfassend eine mikroprozessorbasierte Einheit zum Synchronisieren der Bewegung der Zufuhrmittel (10) mit der Bewegung des Schlittens (19, 19', 19") und der vertikalen Antriebsmittel (21, 21', 21").

12. Linie nach einem oder mehreren der Ansprüche 1 bis 11, wobei die Auswalzvorrichtung (6, 6', 6") mehrere Kegel (30, 30', 30") umfasst, die um eine im Wesentlichen vertikale Achse (X) drehen, wobei jeder der Kegel (30, 30', 30") außerdem um jeweilige geneigte Achsen (Y, Y', Y") zur Wechselwirkung mit der gepressten Scheibe dreht.

13. Linie nach einem oder mehreren der Ansprüche 1 bis 12, wobei der Eingang (2), die erste (3) und zweite Verarbeitungsstation (5) und der Ausgang (9) entlang einer im Wesentlichen horizontalen und geraden Achse (d) angeordnet sind.

14. Linie nach einem oder mehreren der Ansprüche 1 bis 13, umfassend eine dritte Verarbeitungsstation (7), die der zweiten Verarbeitungsstation (5) nachgeschaltet und dem Ausgang (9) vorgeschaltet angeordnet ist, die dritte Verarbeitungsstation (7) umfassend zumindest eine Kalibriervorrichtung (8, 8', 8"), die zur Wechselwirkung mit der ausgewalzten Scheibe zum Kalibrieren ihrer Außenumfangskante geeignet ist, wobei die zumindest eine Kalibriervorrichtung (8, 8', 8") an jeweiligen Antriebsmitteln (17") angebracht ist, sodass sie aus einer jeweiligen Ruheposition in eine jeweilige Arbeitsposition und umgekehrt beweglich ist.

15. Verfahren zum Formen von Teigscheiben unter Benutzung der Linie nach einem oder mehreren der vorhergehenden Ansprüche, umfassend die Schritte des:
a) Vorsehens eines Teigabschnitts (P, P', P"...), der verarbeitet werden soll;
b) Erstverarbeitens des Teigabschnitts (P, P', P"...) mithilfe von zumindest einer Presse (4, 4', 4") zum Erhalten eines im Wesentlichen scheibenförmigen Elements;
c) Zweitverarbeitens der dadurch erhaltenen Scheibe mithilfe einer Auswalzvorrichtung (6, 6', 6") zum Erteilen einer vorgegebenen Höhe und eines vorgegebenen Durchmessers;
wobei während des ersten und/oder zweiten Verarbeitungsschritts der Teigabschnitt (P, P', P"...) fortlaufend vorgeschoben wird, und wobei die zumindest eine Presse (4, 4', 4") und/oder die zumindest eine Auswalzvorrichtung (6, 6', 6") dazu gestaltet sind, im Wesentlichen entlang derselben Achse (d) und in derselben Richtung (V) wie der Teigabschnitt (P, P', P"...), wenn sie damit in Wechselwirkung stehen, vorwärts zu gehen,
und wobei die zumindest eine Presse (4, 4', 4") einen Endhammer zum Pressen des Teigs (P, P', P"...) mit vorgegebener Kraft enthält.

## Revendications

1. Chaîne de formage de disques de pâte tels que des bases de pizza ou similaires, comprenant:
- une entrée (2) pour au moins un morceau de pâte (P, P', P"...) à traiter;
- une première station de traitement (3) avec au moins une presse (4, 4', 4") susceptible d'interagir avec ledit morceau de pâte (P, P', P"...) pour obtenir un élément sensiblement en forme de disque;
- une deuxième station de traitement (5) située en aval de ladite première station (3) et dotée d'au moins un dispositif d'étendage (6, 6', 6") susceptible d'interagir avec ledit disque pressé pour lui impartir une hauteur et un diamètre prédéterminés;
- une sortie (9) pour le disque étendu;
- un moyen de convoyage (10) pour faire avancer ledit morceau de pâte (P, P', P"...) de ladite entrée (2) vers ladite sortie (9);
ledit moyen de convoyage (10) étant conçu pour apporter en continu ledit morceau de pâte (P, P', P"...) de ladite entrée (2) vers ladite sortie (9), ladite au moins une presse (4, 4', 4") et/ou ledit au moins un dispositif d'étendage (6, 6', 6") étant conçus pour avancer suivant le même axe (d) et dans le même sens (V) que ledit morceau de pâte (P, P', P"...) lorsqu'ils interagissent avec lui afin de traiter la pâte (P, P', P"...) pendant qu'elle est en mouvement,
et ladite au moins une presse (4, 4', 4") comprenant un marteau terminal pour presser la pâte (P, P', P"...) avec une force prédéterminée.

2. Chaîne selon la revendication 1, ladite au moins une presse (4, 4', 4") et/ou ledit au moins un dispositif d'étendage (6, 6', 6") étant en outre conçus pour avancer sensiblement à la même vitesse que ledit morceau de pâte (P, P', P"...) lorsqu'ils interagissent avec lui.

3. Chaîne selon la revendication 1 ou 2, dans laquelle ledit moyen de convoyage (10) comprend un convoyeur à courroie simple s'étendant de ladite entrée (2) à ladite sortie (9).

4. Chaîne selon la revendication 1, 2 ou 3, dans laquelle ledit moyen de convoyage (10) déplace ledit morceau de pâte (P, P', P"...) à une vitesse sensiblement constante.

5. Chaîne selon une des revendications 1 à 4, comprenant un moyen (17, 17', 17") d'entraînement de ladite au moins une presse (4, 4', 4") et/ou dudit au moins un dispositif d'étendage (6, 6', 6") d'une première position de repos loin dudit morceau de pâte (P, P', P"...) vers une seconde position de travail dans laquelle ils interagissent avec ledit morceau de pâte (P, P', P"...).

6. Chaîne selon la revendication 5, dans laquelle ledit moyen d'entraînement (17, 17', 17") comporte un châssis (18, 18', 18") doté de barres de guidage transversales (20, 20', 20") sensiblement parallèles à l'axe d'avancement (d) de la pâte (P, P', P").

7. Chaîne selon la revendication 6, dans laquelle ledit moyen d'entraînement (17, 17', 17") comporte en outre un chariot (19, 19', 19") qui glisse le long desdites barres de guidage transversales (20, 20', 20"), ladite au moins une presse (4, 4', 4") et/ou ledit au moins un dispositif d'étendage (6, 6', 6") étant montés sur ledit chariot (19, 19', 19").

8. Chaîne selon la revendication 7, dans laquelle ledit chariot (19, 19', 19") comprend un moyen d'entraînement vertical (21, 21', 21 ") pour entraîner verticalement ladite au moins une presse (4, 4', 4") et/ou ledit au moins un dispositif d'étendage (6, 6', 6") de ladite position de repos vers ladite position de travail et vice versa.

9. Chaîne selon une des revendications 1 à 8, dans laquelle lesdites première (3) et/ou deuxième stations de traitement (5) comprennent au moins une plaque (22, 22', 22") placée en dessous dudit moyen de convoyage (10) et faisant face à ladite au moins une presse (4, 4', 4") et/ou audit au moins un dispositif d'étendage (6, 6', 6") pour faire office de butée pour celui ou celle-ci pendant l'interaction avec la pâte (P, P', P").

10. Chaîne selon la revendication 9, dans laquelle ladite au moins une plaque (22, 22', 22") est conçue pour avancer sensiblement à la même vitesse que ladite au moins une presse (4, 4', 4") et/ou ledit au moins un dispositif d'étendage (6, 6', 6") pendant l'interaction avec ledit morceau de pâte (P, P', P").

11. Chaîne selon une ou plusieurs des revendications 1 à 10, comprenant une unité basée sur microprocesseur pour synchroniser le mouvement dudit moyen de convoyage (10) avec le mouvement dudit chariot (19, 19', 19") et dudit moyen d'entraînement vertical (21, 21', 21 ").

12. Chaîne selon une ou plusieurs des revendications 1 à 11, dans lequel ledit dispositif d'étendage (6, 6', 6") comprend une pluralité de cônes (30, 30', 30") tournant autour d'un axe sensiblement vertical (X), chacun desdits cônes (30, 30', 30") tournant aussi autour d'axes inclinés respectifs (Y, Y', Y") pour interagir avec le disque pressé.

13. Chaîne selon une ou plusieurs des revendications 1 à 12, dans lequel ladite entrée (2), lesdites première (3) et seconde (5) stations de traitement et ladite sortie (9) sont disposées suivant un axe sensiblement horizontal et rectiligne (d).

14. Chaîne selon une ou plusieurs des revendications 1 à 13, comprenant une troisième station de traitement (7) située en aval de ladite deuxième station (5) et en amont de ladite sortie (9), ladite troisième station (7) comprenant au moins un dispositif de calibrage (8, 8', 8") susceptible d'interagir avec ledit disque étendu pour calibrer son rebord périphérique, ledit au moins un dispositif de calibrage (8, 8', 8") étant monté sur le moyen d'entraînement respectif (17") afin d'être mobile d'une respective position de repos à une respective position de travail et vice versa.

15. Procédé de formage de disques de pâte en utilisant la chaîne selon une ou plusieurs des revendications précédentes, comprenant les étapes suivantes:
a) fournir un morceau de pâte (P, P', P") à traiter;
b) premier traitement dudit morceau de pâte (P, P', P") avec au moins une presse (4, 4', 4") pour obtenir un élément sensiblement en forme de disque;
c) second traitement du disque ainsi obtenu avec un dispositif d'étendage (6, 6', 6") pour lui impartir une hauteur et un diamètre prédéterminés;
ledit morceau de pâte (P, P', P") avançant en continu pendant ladite première et/ou ladite seconde étape de traitement et ladite au moins une presse (4, 4', 4") et/ou ledit au moins un dispositif d'étendage (6, 6', 6") étant conçus pour avancer sensiblement suivant le même axe (d) et dans le même sens (V) que ledit morceau de pâte (P, P', P"...) lorsqu'ils interagissent avec lui,
et ladite au moins une presse (4, 4', 4") comprenant un marteau terminal pour presser la pâte (P, P', P"...) avec une force prédéterminée.
